# EUROPEAN PATENT APPLICATION

(11) **EP 4 836 208 A1**
(43) Date of publication of application: **04.11.2026**
(21) Application number: 24912529.5
(22) Date of filing: 17.12.2024
(51) Int. Cl.: H01S 1/06, G04F 5/14

(54) **ATOM TRAP DEVICE, ATOM COOLING DEVICE, SPECTROSCOPIC DEVICE, OPTICAL LATTICE CLOCK, QUANTUM COMPUTER, COIL, ATOM TRAP METHOD, ATOM COOLING METHOD, AND SPECTROSCOPIC METHOD**

(30) Priority: 28.12.2023 JP 2023222419
(71) Applicant: RIKEN, Wako-shi, Saitama 351-0198 (JP)
(72) Inventor: KATORI, Hidetoshi, Wako-shi Saitama 351-0198 (JP)
(74) Representative: Hautier IP - MC/EP
(86) International application number: PCT/JP2024/044608
(87) International publication number: WO 2025/142640

(57) **Abstract**

The atomic trapping device 10 for trapping atoms comprises an atomic trapping unit16 into which a beam of atomic gas is incident. The atomic trapping unit 16 comprises a plurality of optical elements that form a laser light group 18 and a magnetic field generating unit 22. The magnetic field generating unit 22 comprises at least two helical coils and a tapered solenoid coil. The helical coils are configured such that, as they extend in the direction in which atoms are guided, they taper toward the tip and their winding density becomes sparser. The helical coils are arranged in opposition such that the distance between them becomes narrower as they extend in the direction in which atoms are guided. The tapered solenoid coil generates a magnetic field that modulates the component of the magnetic field generated by the helical coils in the direction in which the atoms are guided. The atomic trap section 16 may comprise baseball coils instead of helical coils and a tapered solenoid coil.

## Description

This disclosure relates to an atomic trapping device, an atomic cooling device, a spectrometer, an optical lattice clock, a quantum computer, a coil, an atomic trapping method, an atomic cooling method and a spectroscopic method.

### BACKGROUND ART

Magneto-optical trapping, hereinafter also referred to as "MOT", is a well-known method for trapping atoms in space, see, for example, Non-Patent Literatures 1 and 2. The principle of MOT is outlined below.

MOT achieves atomic cooling and trapping by utilizing the drag force by laser cooling and the restoring force generated by the Zeeman effect in a quadrupole magnetic field. In MOT, a quadrupole magnetic field is generated using anti-Helmholtz coils, i.e., two coils through which currents flow in opposite directions. A pair of laser lights, each traveling from one of three mutually orthogonal directions, is directed toward these anti-Helmholtz coils such that the point of intersection of the laser lights is centered. The intensity of this quadrupole magnetic field is zero at the center of the anti-Helmholtz coils and increases with distance from the center. The resonance frequency of the atoms undergoes a significant Zeeman shift that increases the farther the atom is from the center due to this quadrupole magnetic field. By appropriately selecting the polarization of the laser light at this time, a restoring force directed toward the origin is generated due to radiation pressure. This allows laser-cooled atoms to be trapped. The region where atoms are trapped by this method is called the MOT region.

Another prior art related to the present disclosure is the optical lattice clock. The optical lattice clock is an atomic clock proposed by the inventor of the present disclosure in 2001. High-precision atomic clocks not only support the advancement of science and technology through precise measurements but also play a crucial role as fundamental systems underpinning modern society, such as satellite-based navigation systems and the construction of high-capacity, high-speed communication networks. Since 1967, when the "second" was defined by the transition frequency of the microwave transition of the cesium atom, cesium atomic clocks have been used as the standard for time and frequency for half a century. During this period, cesium atomic clocks have improved their accuracy by an order of magnitude every ten years through the introduction of laser cooling technology and the development of atomic fountain clocks. Today, they achieve an uncertainty of approximately 15 digits and are shared worldwide as the International Atomic Time.

Meanwhile, recent research on atomic clocks is shifting toward the development of optical clocks based on atomic transitions in the optical frequency range, driven by the rapid advancement of optical frequency control technologies, such as optical frequency combs, narrow-linewidth laser sources, and optical fiber frequency transmission. The accuracy of a clock is proportional to the reference frequency. Therefore, optical clocks based on optical frequencies can achieve accuracy that is several orders of magnitude higher than that of cesium clocks based on microwaves.

The optical lattice clock, proposed by the inventor in 2001, is an atomic clock capable of achieving high precision in a short time by using the optical resonance frequency of several million atoms confined within an optical lattice generated by laser light as its reference. The optical lattice clock is positioned as a next-generation atomic clock capable of achieving 18-digit precision-far surpassing that of cesium clocks in an average time of just a few seconds.

Generally, the principle of optical atomic clocks involves irradiating atoms with laser light and controlling the optical frequency of the laser so that it remains in constant resonance with the atomic resonance transition serving as the clock's reference, thereby realizing a frequency or time that is intrinsic to the atom and unchanging. On the other hand, to achieve an accurate clock, it is necessary to eliminate perturbations surrounding the atoms and accurately read their frequency. Of particular importance is the elimination of frequency shifts caused by the Doppler effect resulting from the thermal motion of the atoms.

Optical lattice clocks, a type of optical atomic clock, eliminate the Doppler effect associated with atomic motion by confining atoms within a region narrower than the wavelength of light using an optical trap created by the interference of laser light. On the other hand, confining atoms with laser light causes the atoms' resonant frequencies to shift due to the laser light. By selecting a specific wavelength, known as a "magic wavelength", that minimizes this effect, the influence of the optical lattice itself can also be eliminated. In fact, magic wavelengths have been experimentally determined for strontium, ytterbium, mercury, cadmium, and magnesium.

To evaluate the accuracy of the realized clock and link the frequency of the optical lattice clock to the International Atomic Time, absolute frequency measurements of the resonance transition of strontium atoms were performed. Subsequently, these measurements were verified through replication by research institutions in the U.S. and France, and in 2006, the optical lattice clock using strontium atoms was adopted as the "secondary definition of the second" as a leading candidate for the redefinition of the "second." As the accuracy of optical lattice clocks improves, the uncertainty of cesium clocks is increasingly becoming a limiting factor in measurement accuracy. Therefore, to perform even higher-precision evaluations, it has become essential to develop multiple optical lattice clocks and compare them directly.

Recent technologies for optical lattice clocks are disclosed, for example, in Patent Literatures 1 to 3. Patent Literature 1 describes a "moving optical lattice" in which atoms are trapped near lattice points of an optical lattice and transported along an atomic transport path. Patent Literature 2 describes a method for setting the effective magic frequency. Patent Literature 3 describes a radiation shield designed to reduce the influence of blackbody radiation emitted from surrounding walls.

The next step in the application of optical lattice clocks is to pioneer new applications for high-precision clocks and work toward their practical implementation. When clock measurements can be performed with a high precision of up to 18 digits, it becomes possible, for example, to detect a difference in height of just 1 cm on the ground as a deviation in the rate of time progression due to general relativistic effects caused by gravity. By utilizing such relativistic effects, a high-precision clock can serve as a precision measurement tool to probe a new world as a high-precision gravitational potential meter. For example, if optical lattice clocks can be made portable for field use, the potential for application to new geodetic technologies, such as elevation measurements between remote locations and the observation of crustal movements, will expand. Furthermore, by mass-producing highly reliable and compact clocks and deploying them in various locations to continuously monitor temporal variations in the gravitational potential, it is conceivable that they could be applied to the detection of crustal movements and the spatial mapping of gravitational fields. In the future, it is expected that the miniaturization and portability of these clocks will contribute to society as a new foundational technology.

### RELATED-ART LITERATURES

### PATENT LITERATURES

Patent Literature 1: International Publication No. 2014/027637
Patent Literature 2: JP Patent Publication No. 2018-510494
Patent Literature 3: JP Patent Publication No. 2019-129166

### NON-PATENT LITERATURES

Non-Patent Literature 1: E.L. Raab et al., M. Prentiss, A. Cable, S. Chu, D.E. Pritchard, "Trapping of Neutral Sodium Atoms with Radiation Pressure," Physical Review. Letters. 59, 2631 (1987).
Non-Patent Literature 2: T. Bergeman, G. Erez, and H. J. Metcalf, "Magnetostatic trapping fields for neutral atoms", Physical Review A 35, 1535 (1987).
Non-Patent Literature 3: Hidetoshi Katori, "Longitudinal Ramsey spectroscopy of atoms for continuous operation of optical clocks," Applied Physics Express 14, 072006 (2021).
Non-Patent Literature 4: Ryoto Takeuchi, Hayaki Chiba, Shoichi Okaba, Masao Takamoto, Shigenori Tsuji, and Hidetoshi Katori, "Continuous outcoupling of ultracold strontium atoms combining three different traps", Applied Physics Express 16, 042003 (2023)
Non-Patent Literature 5: Masami Yasuda and Hidetoshi Katori, "Lifetime Measurement of the 3P2 Metastable State of Strontium Atoms", Phys. Rev. Lett. 92, 153004-Published 15 April 2004
Non-Patent Literature 6: S. B. Nagel, C. E. Simen, S. Laha, P. Gupta, V. S. Ashoka, and T. C. Killian, "Magnetic trapping of metastable 3P2 atomic strontium", PHYSICAL REVIEW A 67, 011401, 2003.
Non-Patent Literature 7: Tomoya Akatsuka, Koji Hashiguchi, Tadahiro Takahashi, Noriaki Ohmae, Masao Takamoto, and Hidetoshi Katori, "Three-stage laser cooling of Sr atoms using the 5s5p3P2 metastable state below Doppler temperatures," PHYSICAL REVIEW A 103, 023331 (2021).
Non-Patent Literature 8: S. Wu, R. C. Brown, W. D. Phillips, and J. V. Porto, "Pulsed Sisyphus scheme for laser cooling of atomic (anti)hydrogen," Physical Review Letters 106, 213001 (2011).

### SUMMARY OF INVENTION

### TECHNICAL PROBLEM

In devices such as atomic clocks and atomic interferometers, it is desirable to continuously supply a cooled atomic gas in order to perform measurements continuously. However, if the atomic gas is allowed to remain stationary in the same location, it is not possible to apply different processes to the atomic gas. As a result, it becomes difficult to continuously supply the atomic gas to downstream devices.

To solve this problem, there is an idea of forming a quasi-three-dimensional quadrupole magnetic field having a magnetic field distribution in which the magnetic field gradient in one axis direction is weaker than those in the other two axis directions, see, for example, Non-Patent Literature 4. The quasi-three-dimensional quadrupole magnetic field referred to here is a magnetic field that combines the spherical quadrupole trap required for MOT with a linear quadrupole guide comprising a bias magnetic field to guide and move atoms that have been relaxed to a state capable of magnetic trapping. This allows atoms that have been laser-cooled in the MOT region and relaxed to a metastable state to be magnetically guided and magnetically trapped at the final trap position.

One method for compactly generating such a quasi-three-dimensional quadrupole magnetic field is to use a bar-shaped permanent magnet, hereinafter referred to as a "bar magnet."

However, when generating a quasi-three-dimensional quadrupole magnetic field using a bar magnet, the problem arises that the leakage magnetic field from the bar magnet is significant. For example, if spectroscopy is attempted at a position approximately 2 cm away from the bar magnet, the leakage magnetic field in the spectroscopy region reaches several tens of G. Such a strong leakage magnetic field adversely affects spectroscopy and is therefore undesirable. Therefore, the problem in generating a quasi-three-dimensional quadrupole magnetic field lies in how to reduce the leakage magnetic field.

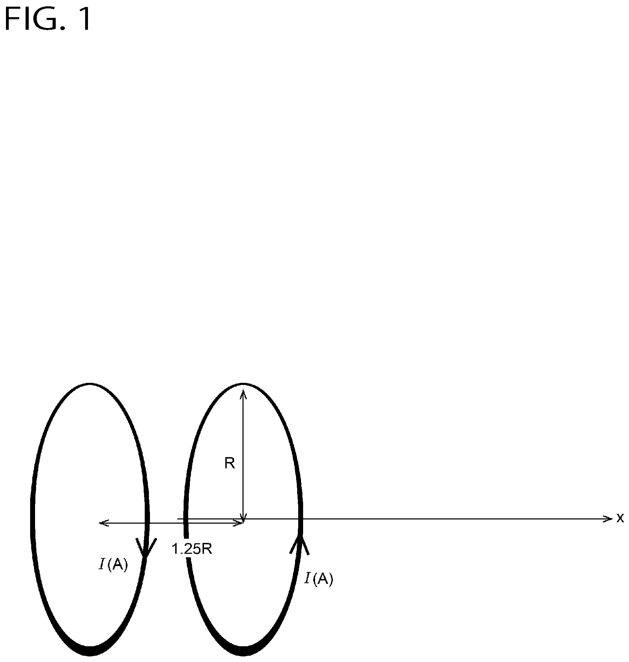

Below, referring to Figure 1, we explain the magnetic field gradient created by an anti-Helmholtz coil. Figure 1 is a schematic diagram of an anti-Helmholtz coil with a radius R and a center-to-center distance of 1.25R. The direction of the line passing through the centers of the two coils is taken as the x-axis. It is assumed that currents I (A) flow in opposite directions through the two coils. In this case, the magnetic field gradient created by these coils in the x-axis direction is expressed by: [Equation 1] $\frac{0.82 {μ}_{0} I}{{R}^{2}} \approx I \left(A\right) / R {\left(cm\right)}^{2} \left(G/cm\right)$ For example, if I = 100 A and R = 1 cm, the magnetic field gradient becomes 100 G/cm.

The behavior of the residual magnetic field B when x >> R is expressed as B ∝ I R² / x⁴. Therefore, miniaturizing the structure of the system contributes to the reduction of the residual magnetic field.

On the other hand, if the typical size of the coil is denoted by D, the current required to generate the same magnetic field gradient is 1/D². Consequently, the power loss becomes 1/D⁴. Thus, miniaturizing the system's structure also contributes to power savings.

However, to realize a magneto-optical trap (MOT), a size of approximately D = 2 cm is required for laser cooling of atoms. Consequently, a method is required to continuously connect the MOT magnetic field, which requires a large volume, with a compact magnetic trap.

A general purpose of the present disclosure is to generate a compact quasi-three-dimensional quadrupole magnetic field for realizing an MOT followed by a magnetic trap, and to minimize the leakage magnetic field generated as much as possible.

### SOLUTION TO PROBLEM

To solve the above problem, an atomic trapping device according to one aspect of the present disclosure is an atomic trapping device for trapping atoms and comprises an atomic trapping unit into which a beam of atomic gas is incident. The atomic trapping unit comprises a plurality of optical elements that form a laser light group and a magnetic field generating unit. The magnetic field generating unit comprises at least two helical coils and a tapered solenoid coil. The helical coils are configured such that, as they extend in the direction in which atoms are guided, they taper toward the tip and their winding density becomes sparser. The helical coils are arranged in opposition such that the distance between them becomes narrower as they extend in the direction in which atoms are guided. The tapered solenoid coil generates a magnetic field that modulates the component of the magnetic field generated by the helical coils in the direction in which the atoms are guided.

In one embodiment, the magnetic field generating unit may form a magnetic field distribution that generates a first region with a larger magnetic field gradient for realizing a magneto-optical trap and a second region with a smaller magnetic field gradient in the guide direction for realizing atomic magnetic field guidance.

In one embodiment, the magnetic field distribution may be a quasi-three-dimensional quadrupole magnetic field that is a spherical quadrupole magnetic field in the first region and a linear quadrupole magnetic field with a bias magnetic field in the second region.

In one embodiment, the atomic trapping device may comprise a magnetic trap for trapping guided atoms within the final trap region.

In one embodiment, the volume of the first region may be 1000 mm³ or more, and the volume of the final trap region may be 1 mm³ or less.

In one embodiment, the intensity of the leakage magnetic field from the magnetic field generating unit at a position at least 2 cm away from the magnetic field generating unit may be 1 G or less.

In one embodiment, the direction in which the atoms may be guided is the direction in which gravitational force acts.

In one embodiment, the helical coil and the tapered solenoid coil may be fabricated using a multi-layer PCB substrate.

In one embodiment, the magnetic field generating unit may comprise a baseball coil.

In one embodiment, the atoms may be strontium atoms.

In one embodiment, the atoms may be ytterbium atoms.

Another aspect of the present disclosure is an atomic cooling device. This device comprises an atomic trapping device of the aforementioned aspect and a Doppler cooling mechanism.

Yet another aspect of the present disclosure is spectrometer. This spectrometer comprises the atomic cooling device of the aforementioned aspect and a spectroscopic unit.

Yet another aspect of the present disclosure is an optical lattice clock. This optical lattice clock comprises a physical package, an optical system, a control unit and a PC. The physical package comprises an atomic cooling device of the aforementioned aspect and a clock transition excitation unit.

Yet another embodiment of the present disclosure is a quantum computer. This quantum computer comprises a physical package, an optical system, a control unit and a PC. The physical package comprises an atomic cooling device of the aforementioned aspect and a clock transition excitation unit corresponding to quantum bit operations.

Yet another aspect of the present disclosure is a coil. This coil is a helical coil configured such that the winding density becomes sparser as the coil tapers toward the front.

Yet another aspect of the present disclosure is an atomic trapping method. This method is a method for trapping atoms using an atomic trapping device comprising an atomic trapping unit and includes supplying atoms, magneto-optically trapping the atoms using the atomic trapping unit and magnetically trapping and guiding the atoms using the atomic trapping unit. The atomic trapping unit comprises a plurality of optical elements that form a laser light group and a magnetic field generating unit. The magnetic field generating unit comprises at least two helical coils and a tapered solenoid coil. The helical coils are configured such that, as they extend in the direction in which atoms are guided, they taper toward the tip and their winding density becomes sparser. The helical coils are arranged in opposition such that the distance between them becomes narrower as they extend in the direction in which atoms are guided and wherein the tapered solenoid coil generates a magnetic field that modulates the component of the magnetic field generated by the helical coils in the direction in which the atoms are guided.

In one embodiment, the magnetic field generating unit may comprise a baseball coil instead of the helical coils and the tapered solenoid coils.

Another aspect of the present disclosure is an atomic cooling method. This method is a method for cooling atoms using an atomic cooling device of the aforementioned aspect and includes supplying atoms, magneto-optically trapping the atoms using the atomic trapping unit, magnetically trapping and guiding the atoms using the atomic trapping unit and Doppler cooling the guided atoms using the Doppler cooling mechanism.

Yet another aspect of the present disclosure is a spectroscopic method using a spectrometer comprising an atomic cooling device of the aforementioned aspect and a spectrometer unit and includes supplying atoms, magneto-optically trapping the atoms using the atomic trapping unit, magnetically trapping and guiding the atoms using the atomic trapping unit, Doppler cooling the guided atoms using the Doppler cooling mechanism and performing spectroscopy using the spectroscopy unit.

In one embodiment, the atomic cooling device may comprise a Sisyphus cooling mechanism instead of a Doppler cooling mechanism and may include Sisyphus cooling the guided atoms using the Sisyphus cooling mechanism.

### ADVANTAGEOUS EFFECTS OF INVENTION

According to the present disclosure, a compact quasi-three-dimensional quadrupole magnetic field can be generated to realize a MOT and a subsequent magnetic trap while minimizing the leakage magnetic field generated.

### BRIEF DESCRIPTION OF DRAWINGS

[FIG. 1] Fig. 1 is a schematic diagram of an anti-Helmholtz coil.
[FIG. 2] Fig. 2 is a diagram showing the energy levels of strontium atoms.
[FIG. 3] Fig. 3 is a diagram showing the process flow of the atomic trapping method according to an embodiment.
[FIG. 4] Fig. 4 is a diagram showing the arrangement of two coils of which leading ends taper toward the direction in which the atoms are guided.
[FIG. 5] Fig. 5 is a schematic diagram of a coil in which the winding density becomes sparser toward the leading end.
[FIG. 6] Fig. 6 is a schematic diagram of a tapered solenoid coil.
[FIG. 7] Fig. 7 is an oblique view showing the atomic trapping device according to the first embodiment.
[FIG. 8] Fig. 8 is an oblique view showing the atomic trapping device according to the first embodiment.
[FIG. 9] Fig. 9 is a view of the atomic trapping device according to the first embodiment as seen from the -z direction.
[FIG. 10] Fig. 10 is a view of the atomic trapping device according to the first embodiment as seen from the y direction.
[FIG. 11] Fig. 11(a) is a plan view of the magnetic field generating unit as seen from the +z direction. Fig. 11(b) is a diagram showing the absolute value of the magnetic field intensity along the y-axis and the resultant force acting on the atom, which is the combination of the magnetic force and the gravitational force.
[FIG. 12] Fig. 12 is a diagram showing the contour lines of the leakage magnetic field generated by the system shown in Fig. 11(a). Figure 12(a) shows the y-z plane at x = 0, and Figure 12(b) shows the x-y plane at z = 0.
[FIG. 13] Fig. 13 is a schematic diagram of an implementation example of the magnetic field generating unit.
[FIG. 14] Fig. 14 is a schematic diagram of a magnetic field generating unit composed of four multi-layer PCB boards.
[FIG. 15] Fig. 15 is a diagram showing a coil wired on the first layer of a multi-layer PCB.
[FIG. 16] Fig. 16 is a schematic diagram of a variant of the magnetic field generating unit.
[FIG. 17] Fig. 17 is a functional block diagram of the optical lattice clock according to the fourth embodiment.
[FIG. 18] Fig. 18 is a schematic diagram showing the third embodiment.
[FIG. 19] Fig. 19 is a schematic diagram showing the fourth embodiment.

### DESCRIPTION OF EMBODIMENTS

The present disclosure will now be described with reference to the drawings based on preferred embodiments. The embodiments are not intended to limit the disclosure but are merely illustrative, and not all features or combinations of features described in the embodiments are necessarily essential to the disclosure. Identical or equivalent components, elements, and processes shown in the various drawings are designated by the same reference numerals, and redundant descriptions are omitted as appropriate. Furthermore, the scale and shape of the parts shown in each figure are set for convenience to facilitate explanation and are not to be interpreted restrictively unless specifically stated. Furthermore, when terms such as "first" or "second" are used in this specification or the claims, unless otherwise specified, these terms do not indicate any order or importance but are used solely to distinguish one configuration from another. Additionally, some components that are not essential to the explanation of the embodiments in the drawings are omitted.

### The first embodiment

Hereinafter, the atomic trapping device will be described in detail as the first embodiment of the present disclosure. First, the flow of processes performed by the atomic trapping device of the embodiment will be described. The continuous process broadly comprises a first step and a second step. In the first step, an atomic gas is generated from solid atoms. In the second step, the generated atomic gas is trapped in the MOT region, and these atoms are further magnetically trapped and guided to the final trap position.

For example, as external forces for guiding neutral atoms belonging to the alkaline earth metals, gravitational force, i.e., an external force effective when the mass of the atom is finite, magnetic force, i.e., an external force effective when the atomic magnetic moment is finite, laser radiation pressure, e.g., laser deceleration, laser radiation pressure used in magneto-optical traps (MOT) or optical molasses, and optical dipole force, used in optical dipole force traps, optical lattices, etc. Here, we will explain gravitational force and magnetic force.

Alkaline earth metal atoms, which have two electrons in their outermost shell, have a ground state that is a spin singlet, with both angular momentum and total orbital angular momentum equal to zero. In this case, it might seem difficult to induce motion in an atomic gas using magnetic force as an external force. However, it is known that atoms in the ³P₂ state are generated by optical pumping during the laser cooling process. In the following, this method will be explained using strontium atoms as an example; however, it is also possible to apply this method to atoms belonging to Group 2 and Group 2b of the periodic table, such as magnesium and calcium atoms, as well as to ytterbium atoms.

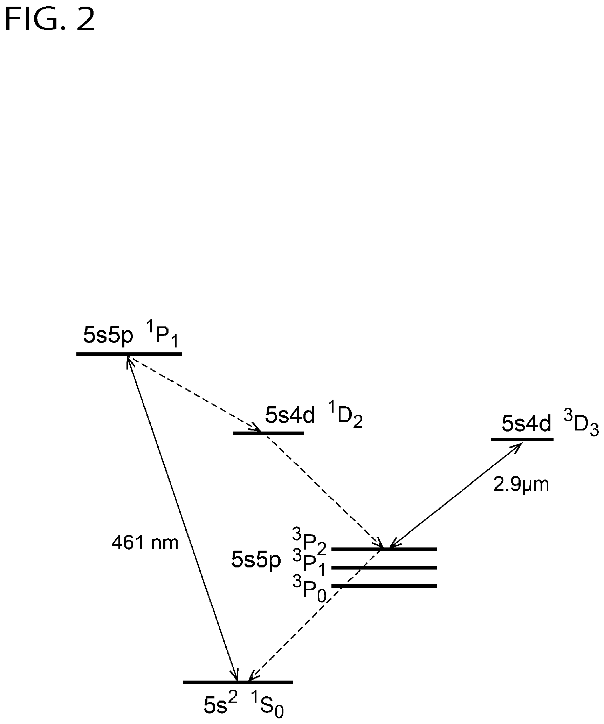

Figure 2 shows the energy levels of a strontium atom. Previous studies using strontium atoms have shown that the lifetime of an atom in the ³P₂ state is 100 seconds or longer, see, for example, Non-Patent Literature 5. Furthermore, another study using strontium atoms has demonstrated that atoms can be trapped by a magnetic field, see, for example, Non-Patent Literature 6. Therefore, atoms in the ³P₂ state, which is considered a metastable state with a long lifetime, can be moved by gravitational force.

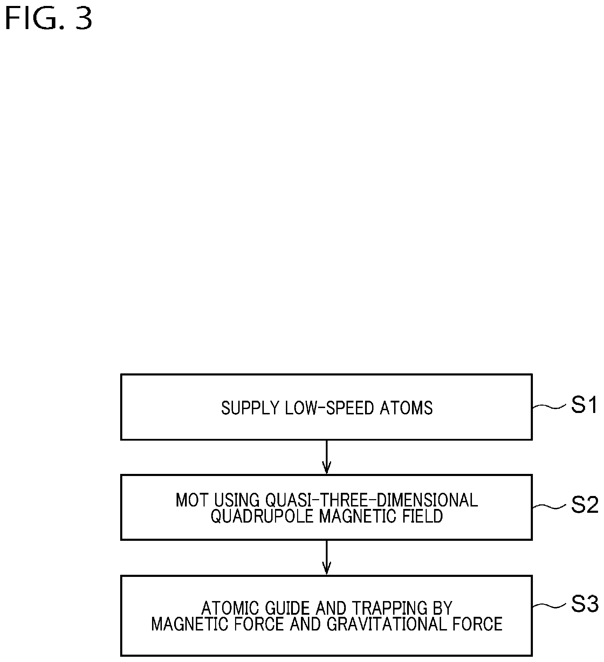

Figure 3 shows the processing flow of the atomic trapping method according to the embodiment. In the embodiment, the following steps S1 to S3 are performed.
S1: Supply of low-speed atoms
S2: Magneto-optical trapping (MOT) using a quasi-three-dimensional quadrupole magnetic field
S3: Magneto-optical guiding using a quasi-three-dimensional quadrupole magnetic field

The principle of atomic trapping in the present embodiment will be explained below using strontium atoms, ⁸⁸Sr, as an example. Here, a three-dimensional coordinate system {x, y, z} is defined. The x-axis, y-axis and z-axis are mutually orthogonal axes. Similar operations are possible with other even-numbered isotopes, e.g., ⁸⁶Sr, or odd-numbered isotopes possessing nuclear spin, ⁸⁷Sr.

The quasi-three-dimensional quadrupole magnetic field shown in steps S2 to S3 has a magnetic field distribution in which the magnetic field gradient in one axis direction is weaker than the magnetic field gradients in the other two axis directions.
The quasi-three-dimensional quadrupole magnetic field: [Equation 2] $\vec{B} = \left\{{XG}_{X}, {YG}_{Y}, {ZG}_{Z}\right\}$ (aₐₙᵢᵢₛₒ = |G_{y} - Gₓ| / |G_{z}| ≈ 1, | G_{y} | << | Gₓ | < |G_{z}|) comprises a region containing a magnetic field distribution, i.e., a linear quadrupole guide intermediate between quasi-three-dimensional quadrupole fields. { Gₓ, G_{y}, G_{z} } represent the magnetic field gradients around the zero-field position. In the example above, the magnetic field gradient in the y-axis direction is smaller than those in the x and z-axis directions, and the magnetic force (F_{y} = -∂U/∂y) is weaker than the magnetic forces in the x and z directions.

In step S2, due to the interaction between the aforementioned quasi-three-dimensional quadrupole magnetic field and the 461 nm laser light resonating between the ¹S₀-¹P₁ states, the atom experiences a restoring force and is trapped near the origin, which is the zero-magnetic-field position. Furthermore, the optical pumping process, in which atoms relax from the ¹P₁state through the ¹D₂ state to the ³P₂ state during the aforementioned laser cooling, generates atoms in the metastable P₂ state.

In step S3, among the atoms in the ³P₂ state, those with magnetic quantum numbers mⱼ of 1 or 2 are energetically stable in a weak magnetic field and are magnetically trapped near the zero-field position of the quasi-three-dimensional quadrupole magnetic field. The magnetic interaction potential U_{mag} between the atom and the quasi-three-dimensional quadrupole magnetic field is expressed by the following equation (1) in the vicinity of the zero-field position:
[Equation 3] ${U}_{mag} = g {μ}_{B} {m}_{j} {G}_{z} \sqrt{\frac{{\left(1+{a}_{aniso}\right)}^{2} {X}^{2}}{4} + \frac{{\left(1-{a}_{aniso}\right)}^{2} {Y}^{2}}{4} + {Z}^{2}}$ (1) g is the g-factor, e.g., g = 3/2 when the atomic state is the ³P₂ state, and µ_{B} is the Bohr magneton.

Furthermore, the magnetic force F_{mag} acting on the atom is expressed by the following Equation (2).
[Equation 4] $\vec{{F}_{mag}} = - ∇ {U}_{mag}$ (2)

Gravitational force, F = mg, acts on the atom in the y-direction. If the gravitational force is greater than the y-component of the magnetic force F_{mag} at the zero-magnetic-field position, the atom moves from the zero-magnetic-field position in the y-direction, i.e., the direction in which the gravitational force acts, due to gravitational force. The atom is trapped at the final trap position within the final trap region by the magnetic field trap. Preferably, the volume of the MOT region, magneto-optical trap region, is 1000 mm³ or more, and the volume of the final trap region is 1 mm³ or less.

When the atom used as a sample is an ⁸⁸Sr atom in the state with magnetic quantum number mⱼ = 2, the magnetic force required to balance gravitational force, assuming a gravitational acceleration of 9.8 m/s², is obtained by a magnetic field with a gradient of 5.2 G/cm. That is, on the y-axis, in order to move an atom from the zero-field center due to gravitational force, the magnetic field gradient from the zero-field center to the trapping position must be less than 5.2 G/cm. On the other hand, to cool and trap an atom in the ¹S₀ state using a magneto-optical trap for several milliseconds or longer, relax it to the ³P₂ state, and magnetically trap the atom, a magnetic field gradient of 30 to 100 G/cm is preferable, i.e., the region of the spherical quadrupole traps at both ends of a quasi-three-dimensional quadrupole magnetic field. A highly anisotropic quasi-three-dimensional quadrupole magnetic field can satisfy these conditions.

Next, we describe the generation of a highly anisotropic quasi-three-dimensional quadrupole magnetic field for executing steps S1 to S3. As mentioned earlier, when a quasi-three-dimensional quadrupole magnetic field is generated using a bar magnet, the problem arises that the leakage magnetic field from the bar magnet is large. Assuming the atomic deceleration distance D is D ~ 10 mm, the MOT region must have a volume of D³ to 1000 mm³. Therefore, the quadrupole magnetic field required to realize the MOT must also have a volume of approximately the same magnitude. On the other hand, the length d of the region where atoms are magnetically trapped after laser cooling is approximately d ~ 1 mm. Consequently, the volume of the quadrupole magnetic field required to realize the magnetic trap is d³ to 1 mm³.

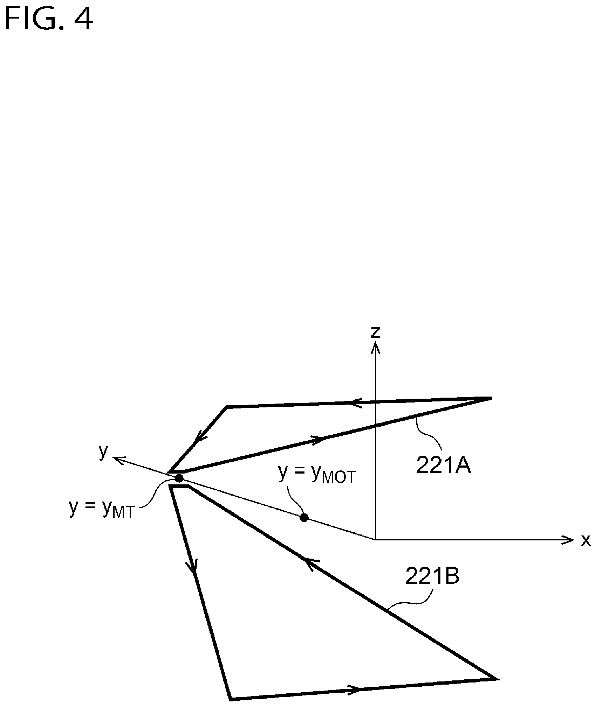

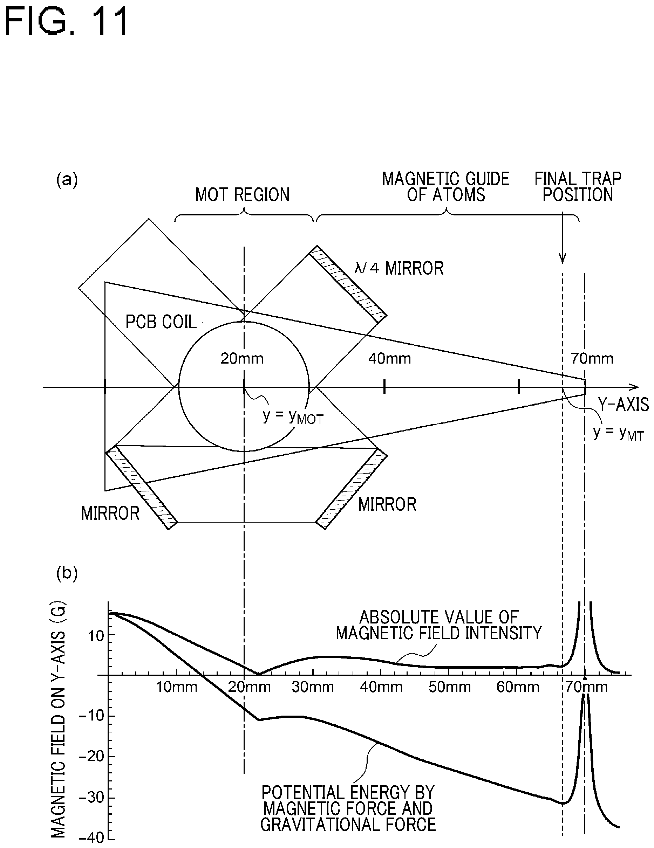

The leakage region of the quadrupole magnetic field is approximately equal to the spacing between the coils. Therefore, by reducing the size of the magnetic trap region, the range of the leakage magnetic field can be narrowed. To achieve this, as shown in Figure 4, two coils 221A and 221B, e.g., trapezoidal coils, are formed such that they taper toward the end as they extend in the direction in which the atoms are guided, the y-axis direction. Coil 221A and coil 221B have substantially the same shape and dimensions. Consider arranging coils 221A and 221B in opposition such that their spacing narrows as they extend in the y-axis direction, forming an anti-Helmholtz coil. That is, when currents flowing in opposite directions are applied to coils 221A and 221B arranged in this manner, a quadrupole magnetic field is generated. Referring also to Figure 11, the final trap position is formed approximately 3 mm inside the coils from the front ends of coils 221A and 221B, i.e., y = 70 mm, y_{MT} = 67 mm. This y-coordinate is denoted as y_{MT}. Furthermore, an MOT region is formed centered at a point approximately 20 mm inside the coils from the rear ends of coils 221A and 221B, i.e., y = 0 mm, this y-coordinate is denoted as y_{MOT}, i.e., y_{MOT} = 20 mm. By selecting the shape and size of coils 221A and 221B such that the volume of the region formed near y = y_{MT} is d³ ~ 1 mm³ and the volume of the region formed near y = y_{MOT} is D³ ~ 1000 mm³, it is expected that MOT regions and magnetic trap regions of appropriate sizes can be formed.

However, in the above configuration, there is a problem in that the magnetic field gradient in the guide unit increases unnecessarily when a uniform current is passed through coils 221A and 221B.

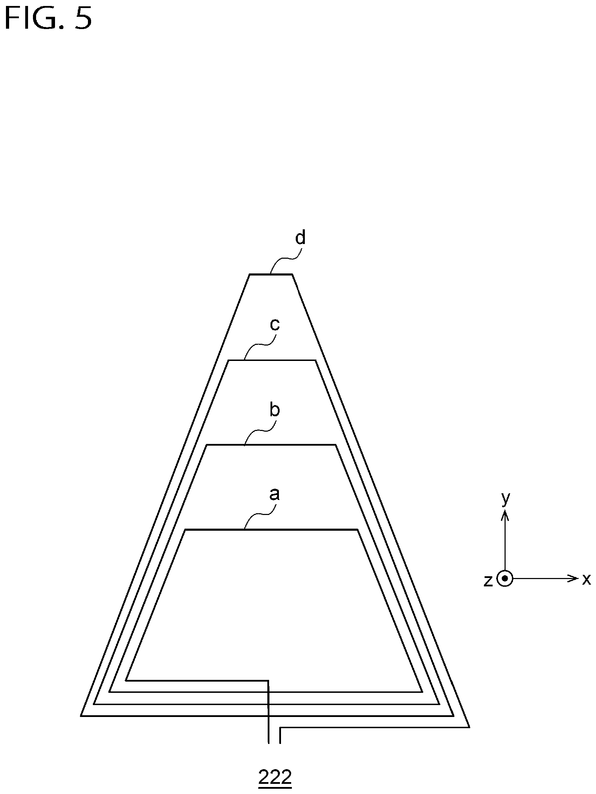

To solve this problem, as shown in Figure 5, coil 222, which tapers toward the y-axis, is configured such that the winding density becomes sparser as it extends along the y-axis. In other words, coil 222 has a helical shape. In the example shown in Figure 5, coil 222 consists of four turns: a, b, c, and d. Two such coils, 222A and 222B, are arranged as shown for 221A and 221B in Figure 4. By appropriately selecting the winding density of the coils, it is possible to reduce the volume of the magnetic guide unit and the trap region while maintaining a constant magnetic field gradient.

When the helical coils shown in Figure 5 are arranged as in Figure 4 and current is passed through them, the advantage of maintaining a constant magnetic field gradient in a plane perpendicular to the y-axis is achieved. However, this results in confinement in the y-axis direction. Consequently, atomic motion is impeded, which poses a problem in that it adversely affects subsequent measurements.

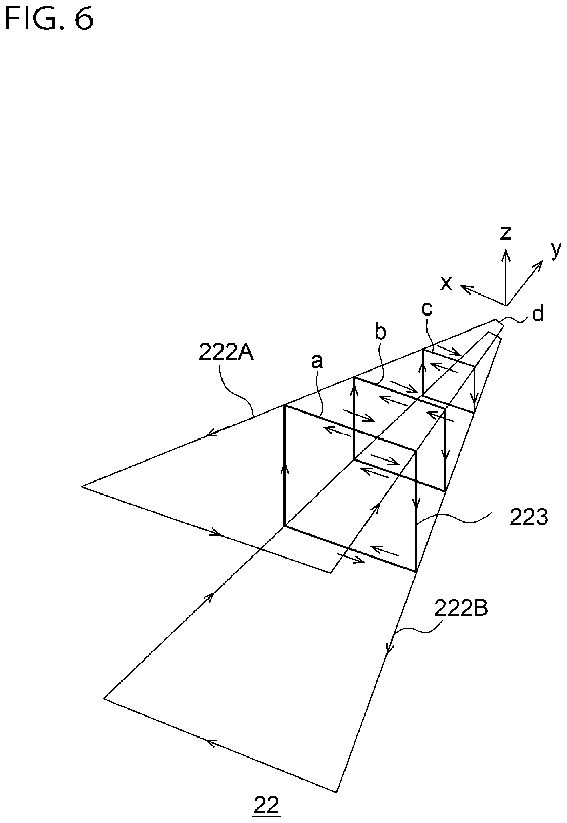

To solve this problem, a tapered solenoid coil 223, as shown in Figure 6, is provided. This allows the y-axis confinement caused by the helical coils 223A and 223B to be canceled out, thereby preventing obstruction of atomic motion.

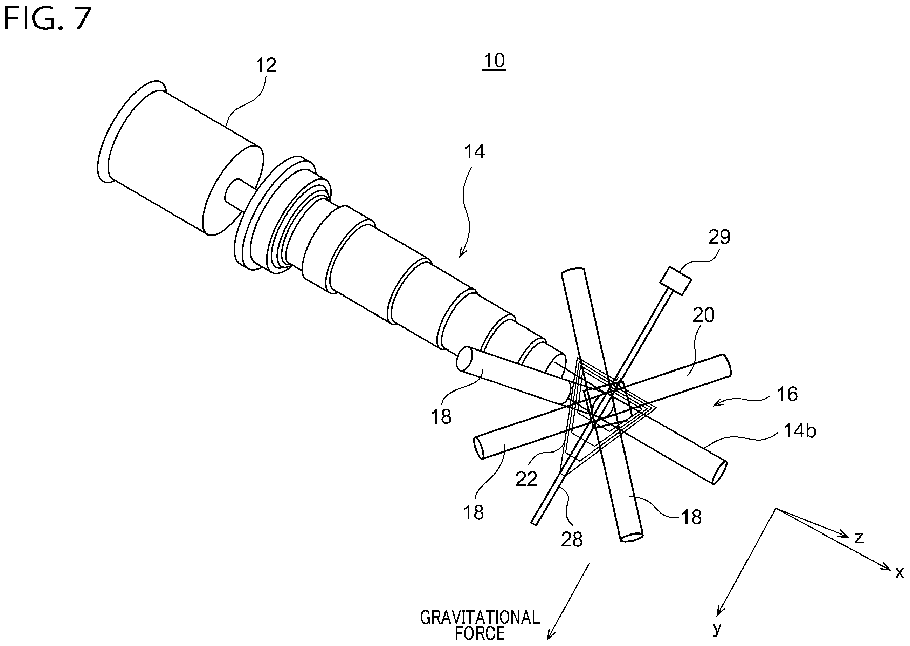

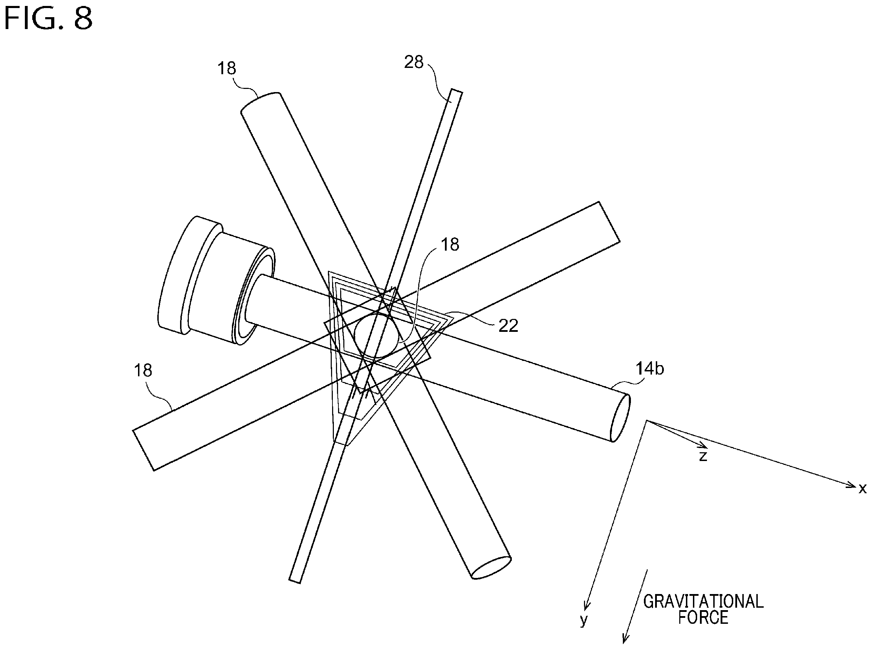

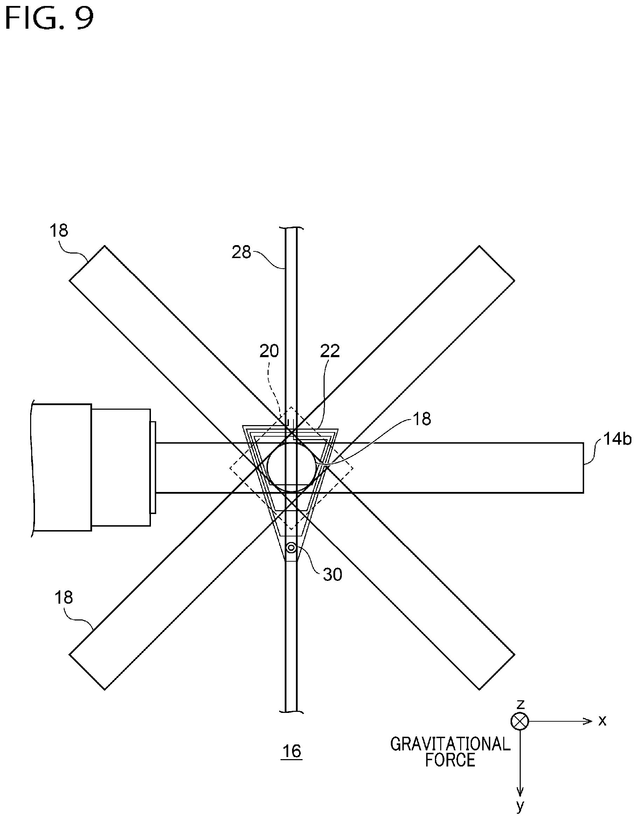

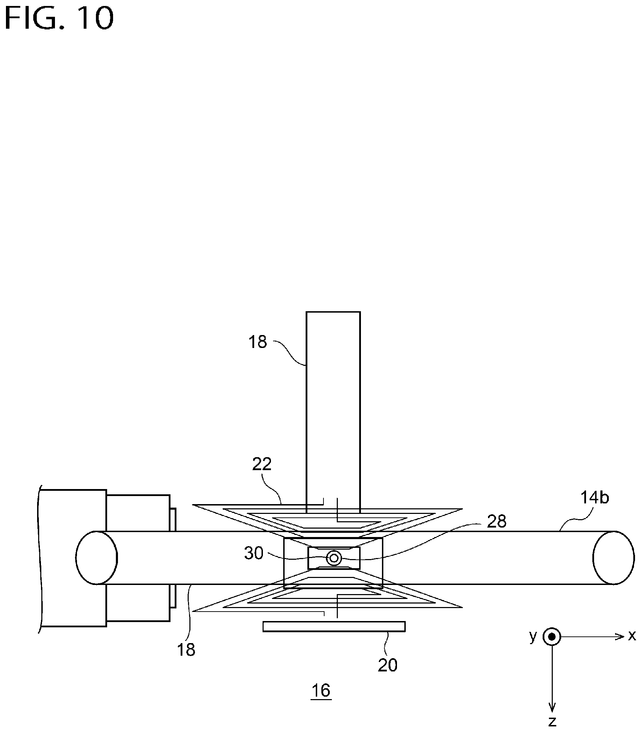

Specific configuration of the embodiment The atomic trapping device and atomic trapping method according to the embodiment will be described below with reference to Figures 7 through 10. Figure 7 is an oblique view showing the atomic trapping device 10 according to the embodiment. Figure 8 is an oblique view showing the atomic trapping device 10. Figure 9 is a view of the atomic trapping device 10 as seen from the -z direction. Figure 10 is a view of the atomic trapping device 10 as seen from the y direction. A three-dimensional coordinate system {x, y, z} is defined. The x-axis, y-axis and z-axis are mutually orthogonal axes. The x-direction is the direction in which the atomic beam emitted from the atomic oven travels. The y-direction is the direction in which gravitational force acts.

The atomic trapping device 10 according to the embodiment comprises an atomic oven 12, a Zeeman decelerator 14 and an atomic trapping unit 16. The atomic oven 12, the Zeeman decelerator 14 and the atomic trapping device 10 are installed in an ultra-high vacuum environment. In the figures, the mounting fixtures for each module, the viewports for inputting and outputting laser light, the vacuum exhaust ports and the vacuum exhaust pumps are omitted.

The atomic oven 12 comprises a sample chamber, a heater, a capillary nozzle, a thermometer, an electrical connector and a thermal radiation shield. A sample is placed inside the sample chamber. For example, strontium atoms, e.g., ⁸⁷Sr or ⁸⁸Sr, are used as the sample. When the sample inside the sample chamber is heated by the heater, the atoms evaporate, generating an atomic gas. The capillary nozzle is connected to the sample chamber. The atomic gas is emitted through the capillary nozzle as a directional atomic beam. The thermometer is used to measure the temperature of the sample chamber. An electrical connector is used to supply power to the heater. A thermal radiation shield is used to shield thermal radiation from the heater and the sample chamber to the outside. A conventional atomic oven may be used as the atomic oven 12. The atomic beam emitted from the atomic oven 12 proceeds to the subsequent Zeeman decelerator 14.

The Zeeman decelerator 14 comprises a bore and a magnetic field generating unit installed around the bore and extends in the x-direction. The magnetic field generating unit includes a solenoid coil, for example, and generates a magnetic field along the central axis, i.e., x-axis, of the bore extending in the x-direction. As an example, the magnetic field generating unit generates a magnetic field of which intensity decreases as it moves away from the atomic oven 12. Furthermore, resonant laser light 14b is irradiated into the bore from a direction opposite to the direction of travel of the atomic beam, i.e., the -x direction. The atomic beam emitted from the atomic oven 12 is irradiated into the bore and travels in the x-direction within the bore. The Zeeman decelerator 14 uses the resonant laser light 14b and the gradient magnetic field formed by the magnetic field generating unit to decelerate the atomic beam emitted from the atomic oven 12, which has a high initial velocity, in accordance with the Zeeman deceleration method, to a velocity at which the downstream atomic trapping device 10 can trap it. The high-temperature atomic beam proceeds through the bore toward the atomic trapping device 10 while being decelerated according to the Zeeman deceleration method. A conventional Zeeman decelerator may be used as the Zeeman decelerator 14.

In the above embodiment, the atomic beam emitted from the atomic oven was decelerated using a Zeeman decelerator. However, this is not limited to this configuration. For example, if a low-speed atomic beam is supplied, a Zeeman decelerator is unnecessary.

The atomic trapping unit 16 includes a vacuum chamber and forms a trapping region within the vacuum chamber where atoms are trapped. The atomic beam that has proceeded from the Zeeman decelerator 14 to the atomic trapping unit 16 is trapped by the atomic trapping unit 16. Specifically, the atomic trapping unit 16 includes a plurality of optical elements that form a laser light group 18 and a magnetic field generating unit 22.

The plurality of optical elements includes, for example, a light source, mirrors such as λ/4 mirrors 20 and a beam splitter and irradiates the laser light group 18 from six directions relative to the zero-magnetic-field position for the purpose of imparting a restoring force to the atoms via radiation pressure. The laser light group 18 comprises a laser light propagating in the x-direction along the x-axis, a laser light propagating in the opposite -x-direction, a laser light propagating in the y-direction along the y-axis, a laser light propagating in the z-direction along the z-axis and a laser light propagating in the opposite -z-direction. A λ/4 mirror 20 is installed on the z-axis. The laser light propagating in the -z direction is formed by the laser light propagating in the z direction and the λ/4 mirror 20. In other words, the laser light propagating in the z-direction is reflected by the λ/4 mirror 20 to form the laser light propagating in the -z-direction.

Referring to Figures 5 to 10, the magnetic field generating unit 22 will be described. The magnetic field generating unit 22 comprises coil 222A, coil 222B and tapered solenoid coil 223, and generates a quasi-three-dimensional quadrupole magnetic field. Coils 222A and 222B have substantially the same shape and dimensions. Coils 222A and 222B taper toward the direction in which the atoms are guided, i.e., the y-axis direction. Coils 222A and 222B have a decreasing winding density as they extend in the direction in which the atoms are guided, i.e., spiral. Coils 222A and 222B are arranged facing each other such that the distance between them decreases as they extend in the direction in which the atoms are guided. Coils 222A and 222B are each arranged in a tapered configuration relative to the x-y plane formed by the x-axis and the y-axis. The tapered solenoid coil 223 is sandwiched between coils 222A and 222B or is positioned on the outer side of coils 222A and 222B.

The λ/4 mirror 20 is installed on the outside of the coils so as not to block
laser light propagating in the x-direction, laser light propagating in the -x-direction, laser light propagating in the y-direction and laser light propagating in the -y-direction. To prevent degradation of the optical characteristics of the λ/4 mirror 20, it may be fixed at locations other than the light-receiving unit, e.g., the four corners. Furthermore, the λ/4 mirror 20 may be installed so that it does not come into direct contact with the magnetic field generating unit 22.

The laser light 28 is a narrow-linewidth laser light for cooling irradiated from the light source 29, and its wavelength is 2.9 µm. The laser light 28 is irradiated in the +y direction along the y-axis. As a result, the atoms are trapped in the vicinity of position 30, where the magnetic force, gravitational force and radiation pressure of the laser light 28 are in equilibrium.

The laser light 28 may be incident from both the +y-axis direction and the -y-axis direction to perform Molasses cooling of the atoms at the equilibrium point of the magnetic force and gravitational force.

Figure 11(a) is a plan view of the magnetic field generating unit 22 as seen from the +z direction. Figure 11(b) shows the absolute value of the magnetic field intensity along the y-axis and the resultant force acting on the atom, which is the sum of the magnetic force and the gravitational force. The magnetic field along the y-axis crosses zero near y = 20 mm, and the MOT region is formed around this point. A spherical quadrupole magnetic field is formed in this region. Outside the MOT region, i.e., the region where the y-value is greater than that of the MOT region, the magnetic field gradient is weak, and a magnetic field guide for the atoms, i.e., magnetic trap region, is formed. A linear quadrupole magnetic field with a bias field is formed in this region. Atoms that have relaxed to the ³P₂ state within the MOT region move in the +y direction under the combined force of the magnetic and gravitational fields. In this system, a potential barrier created by the magnetic trap is established near y = 70 mm, resulting in a final trap position near y = 67 mm.

Consider the system shown in Figure 11(a) when a current of 3 A is passed through a coil with a total of 30 turns. In this case, the magnetic field gradient in the x-axis direction near the MOT position is calculated to be approximately 30 G/cm, and the magnetic field gradient in the y-axis direction is approximately 10 G/cm. From this, it can be seen that an MOT can be realized in the system shown in Figure 11 (a).

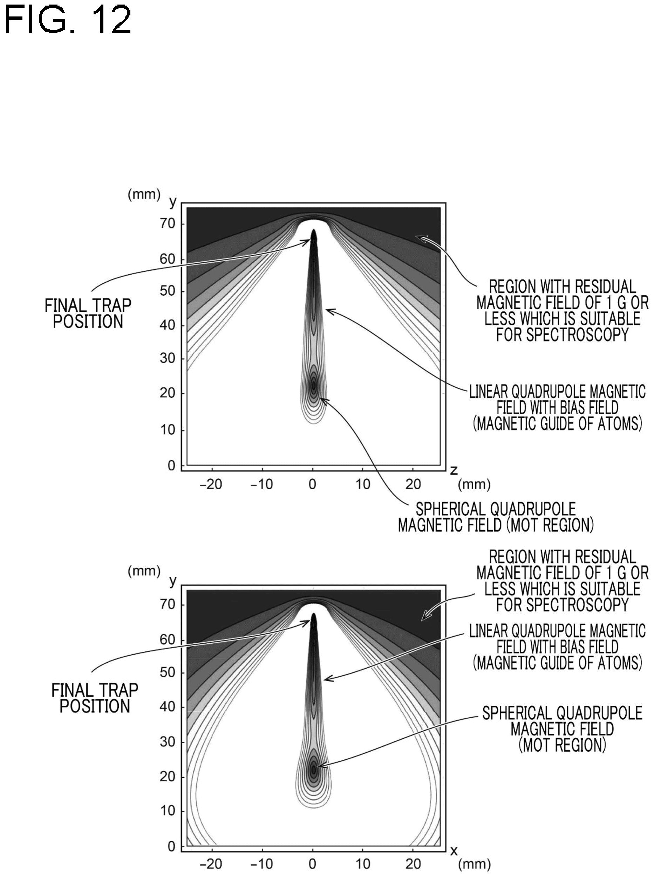

Figure 12 shows the contour lines of the leakage magnetic field generated in the system of Figure 11(a). Figure 12(a) shows the y-z plane at x = 0, and Figure 12(b) shows the x-y plane at z = 0. In these figures, magnetic fields up to 10 G are shown in 1 G increments, and those exceeding 10 G are shown as white areas. In both Figures 12(a) and (b), the region indicated by the dark hatching at the top, i.e., a position more than 2 cm away from the magnetic field source, has a magnetic field intensity of 1 G or less, making it a region suitable for spectroscopy. In contrast, when a quasi-three-dimensional quadrupole magnetic field is formed using, for example, a bar magnet, a leakage magnetic field of approximately 10 G is generated at a position about 2 cm away from the bar magnet. This makes spectroscopy difficult. It can be seen that this problem can be solved according to the present embodiment. Furthermore, Figures 12(a) and (b) also show the spherical quadrupole magnetic field in which MOT is realized, the linear quadrupole magnetic field with a bias field suitable for guiding the atomic magnetic field, and the final trap position of the atom.

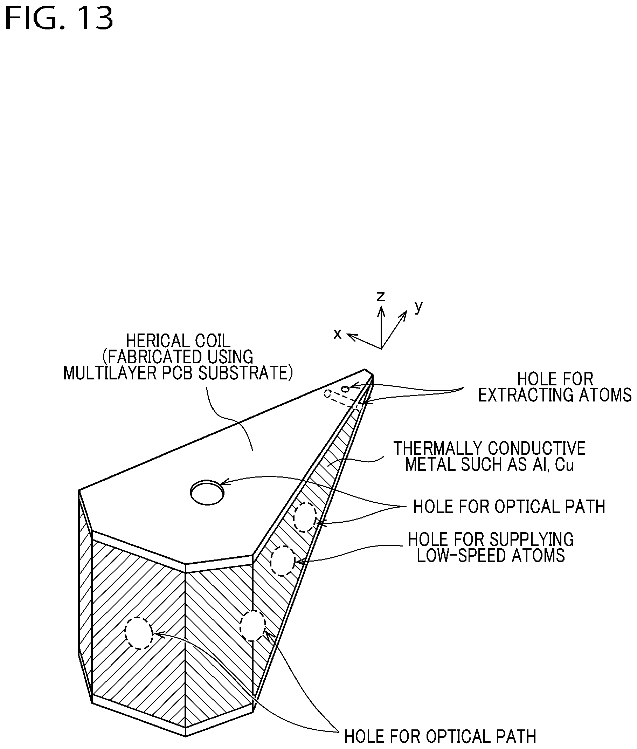

Implementation of the magnetic field generating unit
The following describes an implementation example of the magnetic field generating unit of the embodiment using Figure 13. In the example shown in Figure 13, the helical coil, e.g., coil 222 shown in Figure 5, is fabricated using a multi-layer PCB substrate. The body that supports the multi-layer PCB substrate, sandwiched between two such multi-layer PCBs, is fabricated using thermally conductive metals such as Al, Cu or the like. This enables the dissipation of heat generated by the multi-layer PCB. Holes are provided in the multi-layer PCB and the body to allow the necessary optical path to pass through.

As a point of consideration regarding implementation, we will examine heat dissipation from the multi-layer PCB. When the width of the current path on the PCB is kept constant, the power loss of the PCB is inversely proportional to the thickness of the copper foil forming the board. For example, with a copper foil thickness of 35 µm, which is widely used, the power loss is estimated to be approximately 24 W. When a copper foil thickness of 105 µm is used, the power loss is reduced to approximately 8 W, allowing for mounting without heat dissipation issues. Furthermore, increasing the copper foil thickness can help reduce power consumption.

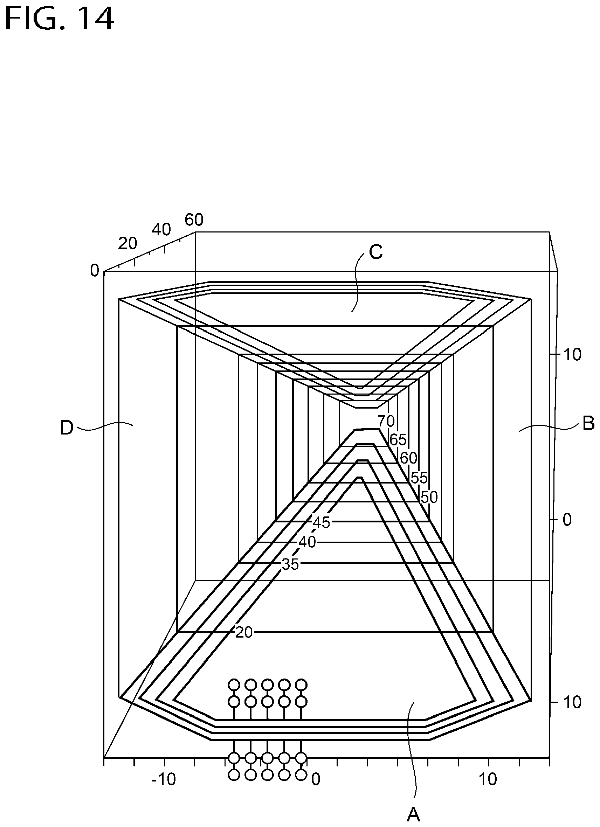

Figure 14 shows an example in which the magnetic field generating unit is composed of four multi-layer PCBs A, B, C and D. The helical coils are formed on the top and bottom multi-layer PCBs A and C. The tapered solenoid coils are formed on the top and bottom multi-layer PCBs A and C, and on the side multi-layer PCBs B and D. PCBs A and C are 10-layer PCBs with nearly identical patterns. Substrates B and D are double-sided PCB substrates with substantially identical patterns. This configuration forms a 9-turn helical coil and a 9-turn tapered solenoid coil.

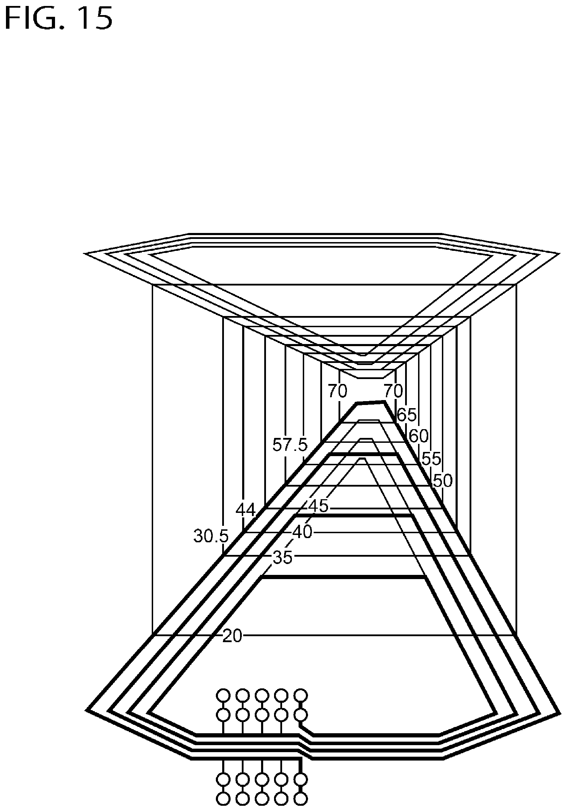

Table 1 shows the wiring of the coils in the magnetic field generating unit formed using a multi-layer, 10-layer, PCB substrate comprising layers 1 through 10 in order from the bottom layer. Figure 15 shows, as an example, the coils wired on the first layer of this multi-layer PCB substrate.

**[Table 1]**

| LAYER OF WIRES | yend, MAXIMUM CIRCUMFERENCE | OUTERMOST CIRCUMFERENCE -1.5mm | OUTERMOST CIRCUMFERENCE -3mm | OUTERMOST CIRCUMFERENCE -4.5mm |
|---|---|---|---|---|
| 1 | 70 | 57.5 | 44 | 30.5 |
| 2 | 70 | 56 | 42.5 | 29 |
| 3 | 70 | 54.5 | 41 | 27.5 |
| 4 | 70 | 53 | 39.5 | 26 |
| 5 | 65 | 51.5 | 38 | 24.5 |
| 6 | 63.5 | 50 | 36.5 | 23 |
| 7 | 62 | 48.5 | 35 | 21.5 |
| 8 | 60.5 | 47 | 33.5 | 20 |
| 9 | 59 | 45.5 | 32 | |
| 10 | SOLENOID HORIZONTAL WIRE 30mm~64.5mm, 1.5mm SPACING | | | |

### Variant

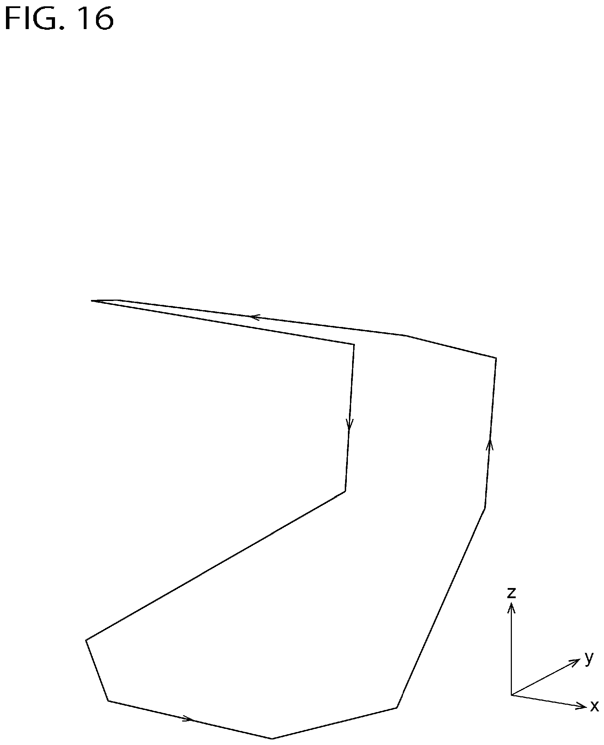

Figure 16 is a schematic diagram of a variant of the magnetic field generating unit. In the aforementioned example, the magnetic field generating unit was configured using a helical coil and a tapered solenoid coil. Alternatively, the magnetic field generating unit may be configured using a coil having the shape shown in Figure 16. By passing a current through the coil shown in Figure 16 in the direction of the arrows, it is possible to simultaneously generate a quadrupole magnetic field and cancel out the magnetic field in the y-axis direction. The coil shown in Figure 16 is called a "baseball coil" because its appearance resembles the seams of a baseball.

The magnetic field generating unit may be configured by combining a helical coil, a tapered solenoid coil and a baseball coil.

As described above, according to this embodiment, an atomic trapping device can be provided that generates a compact quasi-three-dimensional quadrupole magnetic field, thereby realizing MOT and the subsequent magnetic trap while minimizing the generated leakage magnetic field.

### The second embodiment

The second embodiment of the present disclosure is an atomic cooling device. To guide the atomic gas to the subsequent device, it is effective to cool atoms in the ³P₂ state by increasing the number of atoms in the ³P₂ state as much as possible.

One method for increasing the number of atoms in the ³P₂ state involves using a magneto-optical trap that utilizes excitation between the ¹S₀ and ¹P₁ states via a laser with a wavelength of 461 nm to allow relaxation to the ³P₂ state via the ¹D₂ state.

To further cool the ³P₂ state atoms trapped in a magnetic field, Doppler cooling utilizing the ³P₂-³D₃ excitation, corresponding to an energy difference of 2.9 µm, can be employed. Since the linewidth of this transition is extremely narrow at 57 kHz, a cooling temperature of several microkelvins can be achieved, see, for example, Non-Patent Literatures 4 and 7. The achievable cooling temperature in a magnetic trap is expressed by the following Equation (3). [Equation 5] ${T}_{z} = 2 {T}_{D} / 3 \times s / \left(2{f}_{0}\sqrt{{sf}_{0} - 1 - s}\right)$ (3) Here, T_D is the theoretical cooling temperature known as the Doppler temperature, expressed by the following Equation (4). [Equation 6] ${T}_{D} = \frac{{ℏγ}_{IR}}{2 {k}_{B}}$ (4) **γ_{I*R*} IS TRANSITION WIDTH, ℏ IS PLANCK CONSTANT.**
f₀ is the ratio of the magnetic-gravitational force F_{BG} to the maximum radiation pressure F_{R}, expressed by the following Equation (5).
[Equation 7] ${f}_{0} = - \left(3{μ}_{B}{β}_{0}+mg\right) / \left({ℏkγ}_{I R}/2\right)$ (5)

The atomic cooling device according to the second embodiment comprises the atomic trapping device of the aforementioned embodiment, e.g., atomic trapping device 10. The atomic cooling device performs the following steps in addition to processes S1 to S3 of the atomic trapping device.
S4: Perform narrow-linewidth cooling on atoms in the ³P₂ state.
S5: Guide the cooled atoms to a subsequent device using a moving optical lattice or an optical dipole guide. At this time, the atoms may be optically pumped into a third state that is insensitive to magnetic fields.

In step S4, Doppler cooling is performed on atoms in the ³P₂ state by irradiating them with a 2.9 µm laser light that resonates between the ³P₂ and ³D₃ states. This reduces the atomic temperature to approximately several microkelvins. Furthermore, an optical lattice potential may be introduced into the ³D₃ state to enhance the cooling efficiency of the atoms using a Sisyphus process, see, for example, Non-Patent Literature 8.

In step S5, an optical dipole guide is used to connect the position where the atoms are finally trapped to the input port of the subsequent device, i.e., the point where the cooled atoms are introduced. At this stage, the cooled atoms may be guided to the subsequent device by optically pumping them into a state insensitive to magnetic fields. For example, moving optical lattice technology, e.g., see Patent Literature 3, may be used to move the cooled atoms from the position where they are trapped to the input port of the subsequent device. The third state may be the mⱼ = 0 magnetic sublevel of the ³P₂ state, the ³P₀ state or the ¹S₀ state.

According to this embodiment, magnetically trapped atoms can be effectively cooled.

In the above example, magnetically trapped atoms were cooled by Doppler cooling. However, the cooling method is not limited to Doppler cooling. For example, a Sisyphus cooling mechanism may be used instead of a Doppler cooling mechanism.

### The third embodiment

The third embodiment of the present disclosure is a spectrometer. This spectrometer comprises the atomic cooling device of the aforementioned embodiment and a spectrometer unit. The spectrometer unit is installed in a region where the leakage magnetic field from the magnetic field generating unit 22 is sufficiently weak, e.g., a region where the leakage magnetic field is less than 1 G. Atoms cooled by the atomic cooling device are guided to the spectroscopy unit where spectroscopy is performed.

According to this embodiment, a spectroscopy device capable of performing spectroscopy in a compact environment with a weak leakage magnetic field can be provided.

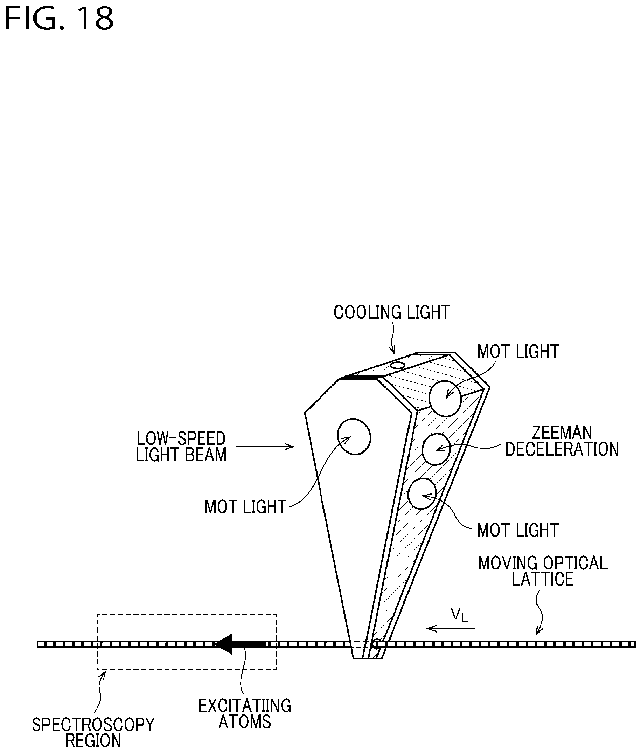

The above embodiment is schematically shown in Figure 18. From the position where the atoms are finally trapped, the atoms are extracted in the ³P₂ state by a moving optical lattice. A spectroscopic laser that excites the ¹S₀-³P₀ clock transition is incident coaxially with this moving optical lattice. The atoms are optically pumped into the ³P₀ state by the optical pump laser 1, defining the starting point of the spectroscopic region. As the atoms move through the spectroscopic region, they interact with the spectroscopic laser and evolve over time into a superposition of the ¹S₀ and ³P₀ states. Optical pump laser 2 defines the end point of the spectroscopic region by optically pumping atoms in the ³P₀ state to the ³P₂ state, followed by a projection measurement of the ¹S₀-³P₀ clock transition. The atomic number measurement laser detects atoms in the ³P₂ state via laser-induced fluorescence from the ³P₂-³D₃ transition, thereby determining the excitation rate of the ³P₀ state.

According to this embodiment, laser light that causes an optical shift in the clock transition and laser-induced fluorescence are prevented from entering the spectral region, enabling high-precision spectroscopic measurement. Furthermore, this embodiment realizes spectroscopic measurement without dead time or wasted time.

The optical pumping conditions are arbitrary. For example, optical pump laser 1 may be used to pump atoms into the ¹S₀ state, and optical pump laser 2 may be used to optically pump atoms in the ³P₀ state to the ³P₂ state. In this case as well, the atomic number measurement laser measures atoms in the ³P₂ state via laser-induced fluorescence of the ³P₂-³P₃ transition to determine the excitation rate of the ³P₀ state.

The spectroscopic laser may be the same as the clock transition laser.

All of the above methods realize zero-dead-time Rabi spectroscopy in the spectroscopic region, i.e., longitudinal excitation Rabi spectroscopy, and achieve high-precision and high-stability optical lattice clocks.

### The fourth embodiment

The fourth embodiment of the present disclosure is an optical lattice clock. This optical lattice clock comprises the atomic cooling device of the aforementioned embodiment.

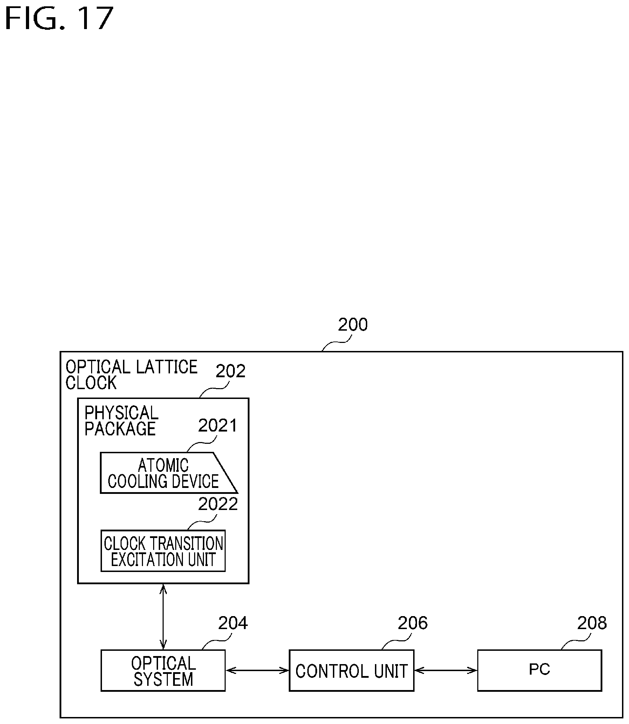

Figure 17 is a functional block diagram of the optical lattice clock 200 according to this embodiment. The optical lattice clock 200 comprises a physical package 202, an optical system 204, a control unit 206 and a PC, personal computer, 208. The physical package 202 comprises an atomic cooling device 2021 and a clock transition excitation unit 2022. The atomic cooling device 2021 is the atomic cooling device described in the preceding embodiments.

The physical package 202 is a device that confines a cooled atomic ensemble in an optical lattice and induces clock transitions. The optical system 204 is a device comprising optical components such as a laser light source for atomic cooling, a laser light source for atomic trapping, a laser light source for clock transition excitation and a laser frequency control device. In addition to delivering laser light to the physical package 202, the optical system 204 excites clock transitions in the physical package 202 using the Rabi or Ramsey spectroscopy method and then measures the electronic states of the atoms via projection measurement. It receives the signal from this projection measurement, converts it into an electrical signal, and performs processing such as providing feedback to the laser light source to match the resonance frequency of the atoms. The control unit 206 is a device that controls the physical package 202 and the optical system 204. The control unit 206 performs, for example, operational control of the physical package 202, operational control of the optical system 204 and analytical processing such as frequency analysis of the clock transition obtained through measurement. The functions of the optical lattice clock 200 are realized through the mutual coordination of the physical package 202, the optical system 204 and the control unit 206.

PC 208 is a general-purpose computer comprising a processor and memory. The functions of PC 208 are realized by executing software on the hardware comprising the processor and memory. An application program for controlling the optical lattice clock 200 is installed on PC 208. PC 208 is connected to the control unit 206 and may control not only the control unit 206 but also the entire optical lattice clock 200, including the physical package 202 and the optical system 204. Furthermore, PC 208 provides the user interface, UI, for the optical lattice clock 200. Through PC 208, the user can perform operations such as exciting the optical lattice clock 200, measuring time and verifying results.

In the physical package 202, a population of atoms cooled by the atomic cooling device 2021 is transported to the clock transition spectroscopy region of the clock transition excitation unit 2022.

In the clock transition region, laser light with a controlled optical frequency is irradiated onto the atoms to perform high-precision spectroscopy of the clock transition, i.e., the atomic resonance transition that serves as the clock standard and measures the frequency that is unique and invariant to the atom. This enables the realization of an accurate atomic clock.

To improve the accuracy of the atomic clock, it is necessary to eliminate perturbations surrounding the atoms and accurately read out the frequency. Of particular importance is the elimination of frequency shifts caused by the Doppler effect resulting from the thermal motion of atoms. In optical lattice clocks, atoms are confined within an optical lattice created by the interference of laser light in a space sufficiently small compared to the wavelength of the clock laser, thereby quantizing the motion of the atoms. However, within the optical lattice, the frequency of the atoms is shifted by the laser light forming the lattice. Therefore, by selecting specific wavelengths and frequencies, referred to as "magic wavelengths" or "magic frequencies", for the optical lattice beam, the influence of the optical lattice on the frequency of the atomic clock transition is eliminated.

The light emitted by the clock transition is received by the optical system 204 and undergoes spectral analysis by the control unit 206 to determine the frequency.

According to this embodiment, a compact optical lattice clock can be provided.

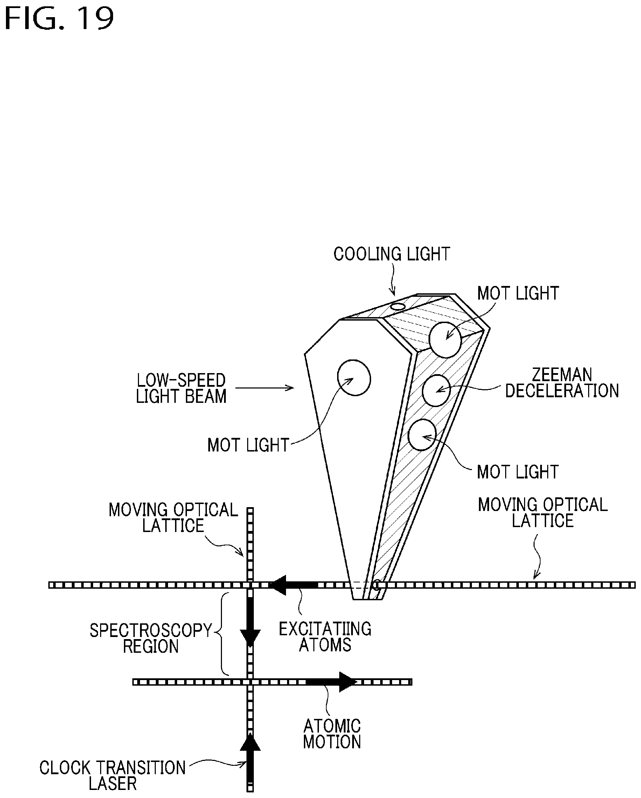

Figure 19 schematically illustrates the above embodiment.

### The fifth Embodiment

The fifth embodiment of the present disclosure is a quantum computer. This quantum computer comprises the atomic cooling device of the aforementioned embodiment.

This quantum computer comprises a physical package, an optical system, a control unit and a PC. The physical package comprises an atomic cooling device and a clock transition excitation unit. The atomic cooling device is the atomic cooling device of the aforementioned embodiment. The clock transition excitation unit is configured to perform operations on qubits.

According to this embodiment, it is possible to realize a quantum computer that is compact and highly scalable in terms of qubits.

### The sixth embodiment

The sixth embodiment of the present disclosure is a coil. This coil is a helical coil shown in Figure 5. Specifically, this coil is a helical coil that tapers toward the front and has a decreasing winding density as it extends forward.

According to this embodiment, a compact quasi-three-dimensional quadrupole magnetic field can be generated to realize MOT and the subsequent magnetic trap.

### The seventh embodiment

The seventh embodiment is an atomic trapping method. This is a method for trapping atoms using an atomic trapping device comprising an atomic oven and an atomic trapping unit. This method includes a step of generating an atomic gas using the atomic oven, a step of magneto-optically trapping atoms using the atomic trapping unit and a step of magnetically trapping and guiding atoms using the atomic trapping unit. The atomic trapping unit comprises a plurality of optical elements that form a laser light group and a magnetic field generating unit. The magnetic field generating unit comprises at least two helical coils and a tapered solenoid coil. The helical coils are configured such that, as the atoms proceed in the direction of guidance, they taper toward the tip and their winding density becomes sparser. The helical coils are arranged in opposition to one another such that the distance between them becomes narrower as the atoms proceed in the direction of guidance. The tapered solenoid coil generates a magnetic field that cancels out the component of the magnetic field generated by the helical coils in the direction of atomic guidance.

### The eighth embodiment

The eighth embodiment is an atomic cooling method. This is a method of trapping atoms using an atomic cooling device comprising the atomic cooling device described in the second embodiment and a Doppler cooling mechanism. This method includes a step of generating an atomic gas using an atomic oven, a step of magneto-optically trapping atoms using an atomic trapping unit, a step of magnetically trapping and guiding atoms using the atomic trapping unit and a step of Doppler cooling the guided atoms using the Doppler cooling mechanism.

### The ninth embodiment

The ninth embodiment is a spectroscopic method. This is a method of performing spectroscopy using the atomic cooling device described in the second embodiment. This method includes a step of generating an atomic gas using an atomic oven, a step of magneto-optically trapping atoms using an atomic trap unit, a step of magnetically trapping and guiding atoms using the atomic trap unit and a step of Doppler cooling the guided atoms using a Doppler cooling mechanism.

The present disclosure has been described above based on the embodiments. These embodiments are illustrative, and it will be understood by those skilled in the art that various modifications are possible in the combination of their respective components and processing steps, and that such modifications also fall within the scope of the present disclosure.

In understanding the technical concept abstracted from the embodiments and variations, the technical concept should not be interpreted as being limited to the content of the embodiments and variations. The aforementioned embodiments and variations are merely illustrative examples, and numerous design changes, such as modifications, additions, or deletions of components, are possible. In the embodiments, content regarding such possible design changes is emphasized by the notation "embodiment." However, design changes are also permitted even for content not marked with such notation.

### INDUSTRIAL APPLICABILITY

The present disclosure is applicable to an atomic trapping device, an atomic cooling device, a spectrometer, an optical lattice clock, a quantum computer, a coil, an atomic trapping method, an atomic cooling method and a spectroscopic method.

### REFERENCE SIGNS LIST

10 atomic trapping device
12 atomic oven
14 Zeeman decelerator
14b laser light for Zeeman deceleration
16 atomic trapping unit
18 laser light group
20 λ/4 mirror
28 laser light
29 light source
221A trapezoidal coil
221B trapezoidal coil
222 helical coil
221A helical coil
221B helical coil
223 tapered solenoid coil
S1 step of supplying low-speed atoms
S2 step of performing MOT using a quasi-three-dimensional quadrupole magnetic field
S3 step of performing magnetic guiding using a quasi-three-dimensional quadrupole magnetic field
S4 step of performing Doppler cooling
S5 step of guiding the cooled atoms to a subsequent device

## Claims

1. An atomic trapping device for trapping atoms comprising:
an atomic trapping unit into which a beam of atomic gas is incident,
wherein the atomic trapping unit comprises a plurality of optical elements that form a laser light group and a magnetic field generating unit,
wherein the magnetic field generating unit comprises at least two helical coils and a tapered solenoid coil,
wherein the helical coils are configured such that, as they extend in the direction in which atoms are guided, they taper toward the tip and their winding density becomes sparser,
wherein the helical coils are arranged in opposition such that the distance between them becomes narrower as they extend in the direction in which atoms are guided and
wherein the tapered solenoid coil generates a magnetic field that modulates the component of the magnetic field generated by the helical coils in the direction in which the atoms are guided.

2. The atomic trapping device according to claim 1,
wherein the magnetic field generating unit forms a magnetic field distribution that generates a first region with a larger magnetic field gradient for realizing a magneto-optical trap and a second region with a smaller magnetic field gradient in the guide direction for realizing atomic magnetic field guidance.

3. The atomic trapping device according to claim 2,
wherein the magnetic field distribution is a quasi-three-dimensional quadrupole magnetic field that is a spherical quadrupole magnetic field in the first region and a linear quadrupole magnetic field with a bias magnetic field in the second region.

4. The atomic trapping device according to claim 3 comprising a magnetic trap for trapping guided atoms within the final trap region.

5. The atomic trapping device according to claim 4,
wherein the volume of the first region is 1000 mm³ or more, and the volume of the final trap region is 1 mm³ or less.

6. The atomic trapping device according to claim 1,
wherein the intensity of the leakage magnetic field from the magnetic field generating unit at a position at least 2 cm away from the magnetic field generating unit is 1 G or less.

7. The atomic trapping device according to claim 1,
wherein the direction in which the atoms are guided is the direction in which gravitational force acts.

8. The atomic trapping device according to claim 1,
wherein the helical coil and the tapered solenoid coil are fabricated using a multi-layer PCB substrate.

9. The atomic trapping device according to claim 1,
wherein the magnetic field generating unit comprises a baseball coil.

10. An atomic cooling device comprising:
an atomic trapping device according to claim 1 and a Doppler cooling mechanism.

11. An atomic cooling device comprising:
an atomic trapping device according to claim 1 and a Sisyphus cooling mechanism.

12. A spectrometer comprising:
an atomic cooling device according to claim 10 or 11 and a spectroscopic unit.

13. An optical lattice clock comprising:
a physical package, an optical system, a control unit and a PC,
wherein the physical package comprises an atomic cooling device according to claim 10 and a clock transition excitation unit.

14. A quantum computer comprising:
a physical package, an optical system, a control unit and a PC,
wherein the physical package comprises an atomic cooling device according to claim 10 and a clock transition excitation unit corresponding to quantum bit operations.

15. A helical coil configured such that the winding density becomes sparser as the coil tapers toward the front.

16. An atomic trapping method using an atomic trapping device comprising an atomic trapping unit including:
supplying atoms,
magneto-optically trapping the atoms using the atomic trapping unit and
magnetically trapping and guiding the atoms using the atomic trapping unit,
wherein the atomic trapping unit comprises a plurality of optical elements that form a laser light group and a magnetic field generating unit,
wherein the magnetic field generating unit comprises at least two helical coils and a tapered solenoid coil,
wherein the helical coils are configured such that, as they extend in the direction in which atoms are guided, they taper toward the tip and their winding density becomes sparser,
wherein the helical coils are arranged in opposition such that the distance between them becomes narrower as they extend in the direction in which atoms are guided and
wherein the tapered solenoid coil generates a magnetic field that modulates the component of the magnetic field generated by the helical coils in the direction in which the atoms are guided.

17. The atomic trapping method according to claim 16,
wherein the magnetic field generating unit comprises a baseball coil instead of the helical coils and the tapered solenoid coils.

18. An atomic cooling method using an atomic cooling device according to claim 10 including:
supplying atoms,
magneto-optically trapping the atoms using the atomic trapping unit,
magnetically trapping and guiding the atoms using the atomic trapping unit and
Doppler cooling the guided atoms using the Doppler cooling mechanism.

19. An atomic cooling method using an atomic cooling device according to claim 10 including:
supplying atoms,
magneto-optically trapping the atoms using the atomic trapping unit,
magnetically trapping and guiding the atoms using the atomic trapping unit and
Sisyphus cooling the guided atoms using the Sisyphus cooling mechanism.

20. A spectroscopic method using a spectrometer comprising an atomic cooling device according to claim 10 and a spectrometer unit including:
supplying atoms,
magneto-optically trapping the atoms using the atomic trapping unit,
magnetically trapping and guiding the atoms using the atomic trapping unit,
Doppler cooling the guided atoms using the Doppler cooling mechanism and
performing spectroscopy using the spectroscopy unit.

21. A spectroscopic method using a spectrometer comprising an atomic cooling device according to claim 11 and a spectrometer unit including:
supplying atoms,
magneto-optically trapping the atoms using the atomic trapping unit,
magnetically trapping and guiding the atoms using the atomic trapping unit,
Sisyphus cooling the guided atoms using the Sisyphus cooling mechanism and
performing spectroscopy using the spectroscopy unit.
